(19) Europäisches Patentamt
European Patent Office
Office européen des brevets

(11) **EP 4 644 484 A1**

(12) **EUROPEAN PATENT APPLICATION**
published in accordance with Art. 153(4) EPC

(43) Date of publication:
**05.11.2025 Bulletin 2025/45**

(21) Application number: 23911929.0

(22) Date of filing: **21.12.2023**

(51) International Patent Classification (IPC):
$C08L\ 77/00^{(2006.01)}$  $C08J\ 5/00^{(2006.01)}$
$C08K\ 5/10^{(2006.01)}$  $C08K\ 5/13^{(2006.01)}$
$C08K\ 7/04^{(2006.01)}$  $C08K\ 9/00^{(2006.01)}$
$C08K\ 13/06^{(2006.01)}$  $H01M\ 10/613^{(2014.01)}$
$H01M\ 10/625^{(2014.01)}$  $H01M\ 10/653^{(2014.01)}$

(52) Cooperative Patent Classification (CPC):
C08J 5/00; C08K 5/10; C08K 5/13; C08K 7/04;
C08K 9/00; C08K 13/06; C08L 77/00;
H01M 10/613; H01M 10/625; H01M 10/653

(86) International application number:
**PCT/JP2023/045909**

(87) International publication number:
**WO 2024/143149 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 JP 2022209378**

(71) Applicant: **TOYOBO MC Corporation
Osaka-shi, Osaka 530-0001 (JP)**

(72) Inventors:
• **IWAMURA, Kazuki**
  **Otsu-shi, Shiga 520-0292 (JP)**
• **MAEDA, Yuki**
  **Otsu-shi, Shiga 520-0292 (JP)**
• **HIWASA, Go**
  **Otsu-shi, Shiga 520-0292 (JP)**

(74) Representative: **Vossius & Partner
Patentanwälte Rechtsanwälte mbB
Siebertstrasse 3
81675 München (DE)**

(54) **POLYAMIDE COMPOSITION AND MOLDED ARTICLE**

(57)     An object of the present invention is to provide a polyamide composition which can afford a molded article that is excellent in heat dissipation properties, strength, and moisture resistance. Another object of the present invention is to provide a molded article that is excellent in heat dissipation properties, strength, and moisture resistance. A polyamide composition contains a polyamide, a fibrous inorganic reinforcing material, and a sintered body containing magnesium oxide, the sintered body is coated with a silica film, and the content of the sintered body is 35% by mass or more. A molded article includes the polyamide composition.

EP 4 644 484 A1

**Description**

TECHNICAL FIELD

The present invention relates to a polyamide composition and a molded article.

BACKGROUND ART

It is known to blend an inorganic substance having a high thermal conductivity (hereinafter, sometimes referred to as a "thermally conductive inorganic filler") in order to impart thermal conductivity, that is, heat dissipation properties to polyamide compositions.

Among thermally conductive inorganic fillers, magnesium oxide particles are inexpensive, have an excellent thermal conductivity, further have a low hardness, and thus particularly useful. A low hardness leads to an advantage that wear of the screws of extruders and molding machines is suppressed when polyamide compositions and molded articles are produced.

However, magnesium oxide particles (for example, light burned magnesia) diminish the strength of polyamide compositions. This is because magnesium oxide particles exhibit poor dispersibility in polyamide and poor adhesive properties to polyamide, which leads to embrittlement of polyamide compositions. Magnesium oxide particles also diminish the moisture resistance of polyamide compositions. This is because magnesium oxide constituting magnesium oxide particles reacts with water. The decrease in strength and moisture resistance becomes remarkable particularly when a large amount of magnesium oxide particles is blended.

As a method for improving such drawbacks of magnesium oxide particles, for example, a method in which magnesium oxide particles are coated with a fatty acid metal salt (see Patent Document 1), and a method in which a maleic anhydride-modified product of ethylene-octene copolymer is blended together with a thermally conductive inorganic filler (see Patent Document 2) have been proposed. In addition to these, a method in which sintered bodies containing magnesium oxide, calcium oxide, and silicon oxide are used (see Patent Document 3), and a method in which the surface of magnesium oxide particles is treated with an oligomeric reactive siloxane (see Patent Document 4) have also been proposed.

PRIOR ART DOCUMENTS

PATENT DOCUMENTS

Patent Document 1: WO2018/180123

Patent Document 2: JP-B-6296197

Patent Document 3: JP-B-5993824

Patent Document 4: JP-B-5602650

SUMMARY OF THE INVENTION

PROBLEMS TO BE SOLVED BY THE INVENTION

In recent years, with the demand for weight reduction and the spread of electric vehicles (EVs), there is a demand for polyamide compositions that are excellent not only in heat dissipation properties but also in other physical properties (for example, strength and moisture resistance).

An object of the present invention is to provide a polyamide composition which can afford a molded article that is excellent in heat dissipation properties, strength, and moisture resistance. Another object of the present invention is to provide a molded article that is excellent in heat dissipation properties, strength, and moisture resistance.

MEANS FOR SOLVING THE PROBLEMS

In order to solve this problem, the present invention has the configuration of [1] below.

[1] A polyamide composition containing:

a polyamide;
a fibrous inorganic reinforcing material; and
a sintered body containing magnesium oxide, in which
the sintered body is coated with a silica film, and
a content of the sintered body is 35% by mass or more.

Here, the "sintered body containing magnesium oxide" is a granular sintered body in which some particles containing magnesium oxide are bonded together.

According to [1], strength, specifically bending strength, can be improved by a fibrous inorganic reinforcing material.

Moreover, heat dissipation properties and strength can be improved by the sintered body containing magnesium oxide compared to a case of using unsintered magnesium oxide particles, specifically light burned magnesia. This will be explained. Magnesium oxide reacts with water to form magnesium hydroxide. As this reaction proceeds, the volume of magnesium oxide expands. When this reaction takes place in a polyamide composition, voids are generated at the interface between magnesium oxide and the resin (for example, polyamide). In contrast, according to [1], the reaction can be suppressed by using a sintered body containing magnesium oxide, and therefore, it is possible to suppress the generation of voids and diminish the size of voids that may be generated. It is considered that this is because parts (that is, necks) where particles containing magnesium oxide are bonded together, and some layers are formed on the particles by sintering when the sintered body is produced. Therefore, it is possible to suppress the decrease in heat dissipation properties and strength that may be caused by voids. Hence, heat dissipation properties and strength can be improved by the sintered body.

Moisture resistance can be improved by the sintered body containing magnesium oxide compared to a case of using unsintered magnesium oxide particles (specifically light burned magnesia). Specifically, the decrease in tensile strength in a high humidity environment can be suppressed. This will be explained. Magnesium oxide reacts with water to form magnesium hydroxide. As this reaction proceeds, the volume of magnesium oxide expands. As this reaction proceeds in a polyamide composition, the tensile strength of the polyamide composition decreases. In contrast, according to [1], the reaction can be suppressed by the sintered body containing magnesium oxide. It is considered that this is because parts (that is, necks) where particles containing magnesium oxide are bonded together, and some layers are formed on the particles by sintering when the sintered body is produced. Therefore, the decrease in tensile strength that may be caused by the reaction (that is, the reaction of magnesium oxide with water) can be suppressed. Hence, the decrease in tensile strength in a high humidity environment can be suppressed, that is, moisture resistance can be improved by the sintered body.

In addition, as the sintered body is coated with a silica film, the sintered body exhibits superior moisture resistance, and thus the heat dissipation properties, strength, and moisture resistance of the polyamide composition can be further improved.

Furthermore, as the content of the sintered body is 35% by mass or more, the heat dissipation properties can be further improved.

In the present invention, the following configurations of [2] to [9] are preferable.

[2] The polyamide composition according to [1], in which a content of the fibrous inorganic reinforcing material is 10% by mass or more.
According to [2], the strength can be further improved as the content of the fibrous inorganic reinforcing material is 10% by mass or more.
[3] The polyamide composition according to [1] or [2], in which the polyamide is a crystalline polyamide.
According to [3], mechanical properties can be improved by the crystalline polyamide.
[4] The polyamide composition according to [3], in which a relative viscosity of the crystalline polyamide is 2.0 or more and 3.6 or less.
Here, the relative viscosity is a value measured at 25°C and a sample (that is, polyamide) of 1 g/dL using 98% sulfuric acid in conformity with JIS K6920-2: 2009.
[5] The polyamide composition according to any one of [1] to [4], further containing an antioxidant.
According to [5], oxidative degradation of the polyamide composition can be suppressed by the antioxidant.
[6] The polyamide composition according to any one of [1] to [5], further containing a hindered phenolic antioxidant.
[7] The polyamide composition according to any one of [1] to [6], further containing a mold release agent.
According to [7], as the polyamide composition contains a mold release agent, it becomes easy to take out the molded article from the mold in a case where the polyamide composition is molded in a mold.

[8] The polyamide composition according to [7], in which the mold release agent is a higher fatty acid ester-based compound.

[9] The polyamide composition according to any one of [1] to [8], in which

a bending strength is 120 MPa or more,
a thermal conductivity is 0.60 W/m·K or more, and
a retention of tensile strength is 40% or more when high humidity treatment in which the polyamide composition is left to stand in an environment of 80°C and a relative humidity of 95% RH for 168 hours is performed, in which the retention of tensile strength is calculated by the following formula:

retention of tensile strength = (tensile strength of polyamide composition test piece subjected to the high humidity treatment/tensile strength of polyamide composition test piece not subjected to the high humidity treatment) × 100.

[10] A molded article including the polyamide composition according to any one of [1] to [9].

In the present invention, the following configurations of [11] to [23] are also preferable.

[11] The polyamide composition according to any one of [1] to [9], in which the polyamide includes polyamide 6.

[12] The polyamide composition according to any one of [1] to [9] and [11], in which a content of the polyamide is 25% by mass or more.

[13] The polyamide composition according to any one of [1] to [9], [11] and [12], in which a content of the polyamide is 50% by mass or less.

[14] The polyamide composition according to any one of [1] to [9] and [11] to [13], in which the fibrous inorganic reinforcing material includes at least one of a glass fiber or a carbon fiber.

[15] The polyamide composition according to any one of [1] to [9] and [11] to [14], in which the fibrous inorganic reinforcing material is a glass fiber.

[16] The polyamide composition according to any one of [1] to [9] and [11] to [15], in which the fibrous inorganic reinforcing material is a carbon fiber.

[17] The polyamide composition according to any one of [1] to [9] and [11] to [16], in which a ratio of an average fiber length to an average fiber diameter in the fibrous inorganic reinforcing material is 100 or more and 1000 or less.

[18] The polyamide composition according to any one of [1] to [9] and [11] to [17], in which a median diameter of the sintered body is 1 $\mu$m or more and 200 $\mu$m or less.

[19] The polyamide composition according to any one of [1] to [9] and [11] to [18], in which a total content of the fibrous inorganic reinforcing material and the sintered body is 50% by mass or more.

[20] The polyamide composition according to any one of [1] to [9] and [11] to [19], in which a total content of the fibrous inorganic reinforcing material and the sintered body is 70% by mass or less.

[21] The polyamide composition according to any one of [1] to [9] and [11] to [20], which is in a form of pellets.

[22] The polyamide composition according to any one of [1] to [9] and [11] to [21], in which the polyamide is polyamide 6.

[23] A molded article including the polyamide composition according to any one of [11] to [22].

## EFFECT OF THE INVENTION

According to the present invention, it is possible to provide a polyamide composition which can afford a molded article that is excellent in heat dissipation properties, strength, and moisture resistance. According to the present invention, it is also possible to provide a molded article that is excellent in heat dissipation properties, strength, and moisture resistance.

## MODE FOR CARRYING OUT THE INVENTION

Hereinafter, embodiments of the present invention will be described in detail.

<1. Polyamide composition>

<1.1. Polyamide>

The polyamide composition of the present embodiment contains a polyamide. Polyamide is a polymer that has an amide bond (-NHCO-) in the main chain.

As the polyamide, a crystalline polyamide is preferred since the mechanical properties of the polyamide composition can be improved. Examples of the crystalline polyamide include polyamide 6 (PA6), polyamide 66 (PA66), polyamide 46 (PA46), polyamide 11 (PA11), polyamide 12 (PA12), polyamide 610 (PA610), polyamide 612 (PA612), polymetaxylylene adipamide (PAMXD6), hexamethylenediamine-terephthalic acid polymer (PA6T), hexamethylenediamine-terephthalic acid and adipic acid polymer (PA6T/66), a copolymer of hexamethylenediamine-terephthalic acid with ε-caprolactam (PA6T/6), trimethylhexamethylenediamine-terephthalic acid polymer (PATMD-T), a copolymer of metaxylylenediamine with adipic acid and isophthalic acid (PAMXD6/MXDI), a copolymer of trihexamethylenediamine with terephthalic acid and ε-caprolactam (PATMDT/6), and a copolymer of diaminodicyclohexylenemethane with isophthalic acid and lauryllactam. These may be used singly or two or more kinds thereof may be used. Among these, polyamide 6 is preferred because of its excellent moldability, melt flowability, and mechanical properties.

Polyamide 6 is preferably a polyamide of which the main raw material is ε-caprolactam. A polyamide of which the main raw material is ε-caprolactam can be obtained by polycondensation. Polyamide 6 may be copolymerized with another monomer. Examples of such a monomer include amino acids such as 11-aminoundecanoic acid, 12-aminododecanoic acid, and para-aminomethylbenzoic acid, lactams such as ω-laurolactam; aliphatic diamines such as tetramethylenediamine, pentamethylenediamine, hexamethylenediamine, 2-methylpentamethylenediamine, undecamethylenediamine, dodecamethylenediamine, 2,2,4-/2,4,4-trimethylhexamethylenediamine, and 5-methylnonamethylenediamine; aromatic diamines such as metaxylylenediamine and paraxylylenediamine; alicyclic diamines such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine; aliphatic dicarboxylic acids such as adipic acid, suberic acid, azelaic acid, sebacic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sulfoisophthalic acid sodium salt, hexahydroterephthalic acid, and hexahydroisophthalic acid; and alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid. Two or more kinds of these may be copolymerized.

In 100 mol% of the sum of monomer units constituting polyamide 6, the unit derived from ε-caprolactam is preferably 60 mol% or more, more preferably 70 mol% or more, still more preferably 80 mol% or more, still more preferably 90 mol% or more. This may be 100 mol%.

The relative viscosity of the crystalline polyamide is preferably 1.5 or more, more preferably 1.8 or more, still more preferably 2.0 or more. When the relative viscosity is 1.5 or more, the strength can be further improved. The relative viscosity of the crystalline polyamide is preferably 4.5 or less, more preferably 4.0 or less, still more preferably 3.6 or less. When the relative viscosity is 4.5 or less, an excessive decrease in fluidity can be suppressed when the polyamide composition is melted and allowed to flow, and the dispersibility of the sintered body can be enhanced. The relative viscosity is a value measured at 25°C and a sample (that is, polyamide) of 1 g/dL using 98% sulfuric acid in conformity with JIS K6920-2: 2009.

In 100% by mass of polyamide contained in the polyamide composition of the present embodiment, the content of the crystalline polyamide is preferably 80% by mass or more. The content of the crystalline polyamide may be 90% by mass or more, 95% by mass or more, 98% by mass or more, or 100% by mass.

The polyamide composition of the present embodiment may further contain an amorphous polyamide. When the polyamide composition contains an amorphous polyamide, transfer to a molded article (that is, mold transfer) becomes easy in a case where injection molding is performed using the polyamide composition. The amorphous polyamide may be a polyamide of which the crystal melting peak is not observed in a thermogram measured by differential scanning calorimetry (DSC). Examples of the amorphous polyamide include polymers obtained by the polycondensation of diamines such as 4,4'-diamino-3,3'-dimethyldicyclohexylmethane (CA), 4,4'-diaminodicyclohexylmethane (PACM), meta-xylylenediamine (MXD), trimethylhexamethylenediamine (TMD), isophoronediamine (IA), 4,4'-diaminodicyclohexylpropane (PACP), and hexamethylenediamine with dicarboxylic acids such as terephthalic acid, isophthalic acid, adipic acid, sebacic acid, and dodecanedicarboxylic acid and, if necessary, lactams such as caprolactam and lauryl lactam. These may be used singly or two or more kinds thereof may be used. Of course, the amorphous polyamide may be copolymerized with another monomer.

In particular, it is preferred that the amorphous polyamide contains an aromatic component from the viewpoint that crystallization is likely to be suppressed. As the amorphous polyamide containing an aromatic component, polyamide 6T/6I of which the raw material is terephthalic acid, isophthalic acid, and adipic acid, and polyamide 6T/66 of which the raw material is terephthalic acid, adipic acid, and hexamethylenediamine are preferred. Among these, polyamide 6T/6I is more preferred from the viewpoint of moldability.

In the polyamide composition of the present embodiment, the polyamide content is preferably 25% by mass or more, more preferably 30% by mass or more, still more preferably 38% by mass or more. The polyamide content is preferably 50% by mass or less, more preferably 45% by mass or less, still more preferably 42% by mass or less.

<1.2. Fibrous inorganic reinforcing material>

The polyamide composition of the present embodiment contains a fibrous inorganic reinforcing material. The strength, specifically, bending strength, can be improved by a fibrous inorganic reinforcing material. In addition to this, the rigidity, heat resistance and the like can be improved.

Examples of the fibrous inorganic reinforcing material include a glass fiber, a carbon fiber, an aramid fiber, an alumina fiber, a silicon carbide fiber, and a zirconia fiber. Examples of the fibrous inorganic reinforcing material include whiskers such as aluminum borate and potassium titanate, acicular wollastonite, and a milled fiber. Among these, a glass fiber and a carbon fiber are preferred. These may be used singly or two or more kinds thereof may be used.

Examples of the glass fiber include a glass fiber in the form of chopped strands. The fiber length of the glass fiber is preferably 1 mm to 20 mm. The cross-sectional shape of the glass fiber may be circular or noncircular. Here, the "cross-sectional shape" refers to the shape of a cross section perpendicular to the longitudinal direction of the glass fiber. Examples of the noncircular cross section include a substantially elliptical cross section, a substantially oval cross section, and a substantially cocoon-shaped cross section. The flatness of the glass fiber having a noncircular cross section is preferably 1.5 to 8. Here, the flatness is the ratio of the major axis to the minor axis (that is, major axis/minor axis) when a rectangle with the minimum area circumscribing a cross section perpendicular to the longitudinal direction of the glass fiber is assumed and then the length of the long side of the rectangle is denoted as the major axis and the length of the short side is denoted as the minor axis. The minor axis of the glass fiber is preferably 1 $\mu$m to 20 $\mu$m. The major axis of the glass fiber is preferably 2 $\mu$m to 100 $\mu$m.

For the fibrous inorganic reinforcing material, the ratio of the average fiber length to the average fiber diameter is preferably 100 or more, more preferably 200 or more. This ratio is preferably 1000 or less, more preferably 800 or less. This ratio may be 500 or less.

The fibrous inorganic reinforcing material is preferably treated with a coupling agent. This can improve the affinity for polyamides and improve the mechanical properties. This can also improve appearance properties. Examples of the coupling agent include organic silane-based compounds, organic titanium-based compounds, organic borane-based compounds, and epoxy-based compounds. The coupling agent is preferably a coupling agent that is likely to react with a carboxylic acid group and/or a carboxylic anhydride group. Examples of coupling agents from a slightly different perspective include silane-based coupling agents, titanate-based coupling agents, and aluminum-based coupling agents. Among these, silane-based coupling agents such as aminosilane coupling agents and epoxysilane coupling agents are preferred. It is preferable to carry out the treatment with a coupling agent in advance, but the coupling agent may be added later.

In the polyamide composition of the present embodiment, the content of the fibrous inorganic reinforcing material is preferably 5% by mass or more, more preferably 10% by mass or more, still more preferably 15% by mass or more. When the content is 5% by mass or more, the bending strength, that is, the strength, can be further improved. Meanwhile, the content of the fibrous inorganic reinforcing material is preferably 40% by mass or less, more preferably 30% by mass or less, still more preferably 25% by mass or less. When the content is 40% by mass or less, it is possible to avoid difficulties in production of a molded article using the polyamide composition.

<1.3. Sintered body>

The polyamide composition of the present embodiment includes a sintered body containing magnesium oxide. Here, the "sintered body containing magnesium oxide" is a granular sintered body in which some particles containing magnesium oxide are bonded together. The sintered body has a high thermal conductivity as the sintered body contains magnesium oxide.

Heat dissipation properties and strength can be improved by the sintered body containing magnesium oxide compared to a case of using unsintered magnesium oxide particles, specifically light burned magnesia. This will be explained. Magnesium oxide reacts with water to form magnesium hydroxide. As this reaction proceeds, the volume of magnesium oxide expands. When this reaction takes place in a polyamide composition, voids are generated at the interface between magnesium oxide and the resin (for example, polyamide). In contrast, according to [1], the reaction can be suppressed by using a sintered body containing magnesium oxide, and therefore, it is possible to suppress the generation of voids and diminish the size of voids that may be generated. It is considered that this is because parts (that is, necks) where particles containing magnesium oxide are bonded together, and some layers are formed on the particles by sintering when the sintered body is produced. Therefore, it is possible to suppress the decrease in heat dissipation properties and strength that may be caused by voids. Hence, heat dissipation properties and strength can be improved by the sintered body.

Moisture resistance can be improved by the sintered body containing magnesium oxide compared to a case of using unsintered magnesium oxide particles (specifically light burned magnesia). Specifically, the decrease in tensile strength in a high humidity environment can be suppressed. This will be explained. Magnesium oxide reacts with water to form magnesium hydroxide. As this reaction proceeds, the volume of magnesium oxide expands. As this reaction proceeds in a polyamide composition, the tensile strength of the polyamide composition decreases. In contrast, according to [1], the reaction can be suppressed by the sintered body containing magnesium oxide. It is considered that this is because parts (that is, necks) where particles containing magnesium oxide are bonded together, and some layers are formed on the particles by sintering when the sintered body is produced. Therefore, the decrease in tensile strength that may be caused by the reaction (that is, the reaction of magnesium oxide with water) can be suppressed. Hence, the decrease in tensile strength in a high humidity environment can be suppressed, that is, moisture resistance can be improved by the sintered body.

The sintered body can be produced by, for example, mixing purified magnesium hydroxide ($Mg(OH)_2$), silicon oxide ($SiO_2$), and calcium oxide (CaO) and heating the mixture at a high temperature. The sintering can be promoted by silicon oxide and calcium oxide. Heating can be carried out, for example, at about 1800°C for about 30 minutes using a rotary kiln. The sintered body obtained by heating may be sieved, if necessary, and classified, if necessary. If necessary, the sintered body may be subjected to surface treatment.

The sintered body preferably contains silicon oxide ($SiO_2$), more preferably contains silicon oxide ($SiO_2$) and calcium oxide (CaO). This is because the strength and moisture resistance of the sintered body can be controlled by adjusting the molar ratio of calcium oxide to silicon oxide (hereinafter sometimes referred to as the "Ca/Si ratio") (see JP-B-5993824). Here, the number of moles of silicon oxide means the number of moles ($MSi$) of silicon element contained in the sintered body converted into silicon oxide ($SiO_2$). The number of moles of calcium oxide means the number of moles ($MCa$) of calcium element contained in the sintered body converted into calcium oxide (CaO). Therefore, the Ca/Si ratio is a value expressed as $MCa/MSi$. The values such as the number of moles, molar ratio, % by mass and the like of each oxide contained in the sintered body can be measured by an inductively coupled plasma (ICP) method using an ICP atomic emission spectrometer, a chelating titration method using a chelating agent such as EDTA, and the like.

The Ca/Si ratio is preferably 0.1 or more, more preferably 0.4 or more, still more preferably 0.8 or more. When the Ca/Si ratio is 0.1 or more, the strength of the sintered body can be improved. Meanwhile, the Ca/Si ratio is preferably less than 2.0, more preferably 1.5 or less, still more preferably 1.2 or less. When the Ca/Si ratio is less than 2.0, the moisture resistance of the sintered body can be improved.

The sintered body may contain magnesium oxide, silicon oxide ($SiO_2$), calcium oxide (CaO), as well as compounds obtained by the reaction of these. The sintered body may contain, for example, $B_2O_3$, $Al_2O_3$, $Fe_2O_3$, and $Na_2SO_4$.

The content of magnesium oxide in the sintered body is preferably 85.0% by mass or more, more preferably 88.0% by mass or more, still more preferably 90.0% by mass or more, still more preferably 92.0% by mass or more, still more preferably 94.0%% by mass or more in 100% by mass of the sintered body. When the content is 85.0% by mass or more, the thermal conductivity of the sintered body is excellent. Meanwhile, the content of magnesium oxide is preferably 99.7% by mass or less in 100% by mass of the sintered body. When the content is 99.7% by mass or less, the sintered body contains other components in a certain amount, and therefore the moisture resistance can be improved.

The particle diameter of the sintered body, specifically the median diameter, is preferably 1 $\mu$m or more, more preferably 2 $\mu$m or more, still more preferably 5 $\mu$m or more, still more preferably 10 $\mu$m or more. When the median diameter is 1 $\mu$m or more, the moisture resistance can be further improved. In addition to this, an excessive decrease in fluidity can be suppressed when the polyamide composition is melted and allowed to flow. The median diameter may be 30 $\mu$m or more, or 60 $\mu$m or more. Meanwhile, the median diameter is preferably 200 $\mu$m or less, more preferably 150 $\mu$m or less, still more preferably 100 $\mu$m or less. When the median diameter is 200 $\mu$m or less, the thermal conductivity can be further improved. The median diameter may be 80 $\mu$m or less. Here, the median diameter is D50 and specifically is the particle diameter at cumulative 50% in the cumulative particle size distribution on the volume basis in the sintered body.

The sintered body is preferably coated with a silica film, that is, an organosilicon compound layer. In other words, the sintered body preferably includes a silica film. As the sintered body is coated with a silica film, the sintered body exhibits superior moisture resistance, and the heat dissipation properties, strength, and moisture resistance of the polyamide composition can be further improved.

In order to form a silica film, for example, an oligomeric reactive siloxane or a silane coupling agent can be used. Among these, an oligomeric reactive siloxane is preferred.

The oligomeric reactive siloxane is preferably a polymer that contains a silane coupling agent. Specifically, the oligomeric reactive siloxane is preferably a polymer that contains an alkoxysilane having a reactive group. The oligomeric reactive siloxane has a reactive group. Specifically, the silane coupling agent contained in the oligomeric reactive siloxane has a reactive group. Examples of the reactive group include a vinyl group, an amino group, an epoxy group, a methacryloxy group, an acryloxy group, and a mercapto group. Among these, a vinyl group, an amino group, and an epoxy group are preferred, and a vinyl group and an amino group are more preferred.

The oligomeric reactive siloxane may be a copolymer of a silane coupling agent and an alkoxysilane not having a reactive group. Examples of the alkoxysilane not having a reactive group include alkyltrialkoxysilanes, alkylmethyldialkoxysilanes, phenyltrialkoxysilanes, phenylmethyldialkoxysilanes, and tetraalkoxysilanes. Among these, alkyltrialkoxysilanes are preferred. The alkyl group of alkyltrialkoxysilanes or alkylmethyldialkoxysilanes preferably has 1 to 18 carbon atoms. The alkyl group may be linear, branched or cyclic. The oligomeric reactive siloxane may be a homopolymer of a silane coupling agent. Incidentally, examples of commercially available oligomeric reactive siloxanes include Dynasylan 6490 and Dynasylan 1146.

Examples of a method for performing a surface treatment on an oligomeric reactive siloxane include a method in which an oligomeric reactive siloxane is added while the sintered body before surface treatment is stirred, and then heating is performed (see JP-B-5602650). At this time, heating may be performed by frictional heat generated by stirring at a high speed, by supplying heat from the outside, or by a combination of these.

A sintered body coated with a silica film (that is, a sintered body including a silica film) can also be purchased. Examples of a commercially available sintered body include "RF-50-AC" manufactured by Ube Material Industries, Ltd.

In the polyamide composition of the present embodiment, the content of the sintered body is 35% by mass or more. As the content of the sintered body is 35% by mass or more, the heat dissipation properties can be further improved. The content of the sintered body is preferably 37% by mass or more, more preferably 38% by mass or more, still more preferably 39% by mass or more. Meanwhile, the content of the sintered body is preferably 55% by mass or less, more preferably 50% by mass or less, still more preferably 47% by mass or less, still more preferably 45% by mass or less.

<1.4. Antioxidant>

The polyamide composition of the present embodiment preferably contains an antioxidant. Oxidative degradation of the polyamide composition can be suppressed by the antioxidant.

As the antioxidant, a hindered phenolic antioxidant is preferred. Examples of the hindered phenolic antioxidant include N,N'-hexamethylene-bis-3-(3,5-di-tert-butyl-4-hydroxyphenyl)propionamide, bis(3,3-bis-(4'-hydroxy-3'-tert-butylphenyl)butanoic acid)glycol ester, 2,1'-thioethylbis(3-(3,5-di-tert-butyl-4-hydroxyphenyl)propionate, 4,4'-butylidene-bis(3-methyl-6-tert-butylphenol), and triethylene glycol-3-(3-tert-butyl-4-hydroxy-5-methylphenyl)propionate ("SONGNOX 2450", molecular weight: 633). These may be used singly or two or more kinds thereof may be used.

In the polyamide composition of the present embodiment, the content of the antioxidant is preferably 0.01% by mass or more, more preferably 0.1% by mass or more. When the content is 0.01% by mass or more, time-dependent oxidative degradation of the polyamide composition can be prevented. Meanwhile, the content of the antioxidant is preferably 1.0% by mass or less, more preferably 0.5% by mass or less.

<1.5. Mold release agent>

The polyamide composition of the present embodiment preferably contains a mold release agent. As the polyamide composition contains a mold release agent, it becomes easy to take out the molded article from the mold when the polyamide composition is molded in a mold.

Examples of the mold release agent include esters and metal salts of long chain fatty acids. Examples of the mold release agent include amide-based compounds such as ethylenebis(terephthalamide) and methylenebis(stearylamide). Examples of the mold release agent include waxes such as aliphatic hydrocarbon-based and polyethylene-based waxes, and polysiloxane-based silicone oils. Among these, fatty acid metal salt-based mold release agents and fatty acid ester-based mold release agents are preferred. In other words, fatty acid metal salts and fatty acid ester-based compounds (that is, fatty acid esters) are preferred. These may be used singly or two or more kinds thereof may be used.

Examples of fatty acid metal salts include metal salts of fatty acids having 12 to 40 carbon atoms, such as stearic acid, palmitic acid, behenic acid, erucic acid, oleic acid, lauric acid, and montanic acid. Among these, metal salts of aliphatic carboxylic acids having 22 to 30 carbon atoms are preferred. In particular, the alkali metal or alkaline earth metal salts of behenic acid, lignoceric acid, montanic acid, and the like are more preferable from the viewpoint of mold releasability. Examples of the alkali metals or alkaline earth metals include lithium, sodium, magnesium, and calcium.

Examples of the fatty acid ester-based compounds include higher fatty acid ester-based compounds. Examples of the higher fatty acid ester-based compounds include stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and a mixture mainly composed of myricyl palmitate.

In the polyamide composition of the present embodiment, the content of the mold release agent is preferably 0.01% by mass or more, more preferably 0.1% by mass or more. When the content of the mold release agent is 0.01% by mass or more, it is possible to prevent the polyamide composition from sticking to the mold when the polyamide composition is injected into a mold, and to prevent wrinkles that may be generated on the surface of the molded article during mold release. Meanwhile, the content of the mold release agent is preferably 1.0% by mass or less, more preferably 0.5% by mass or less.

<1.6. Other additives and the like>

The polyamide composition of the present embodiment may contain, for example, carbon black, copper oxide, an alkali metal halide, a light stabilizer, a heat stabilizer, a crystal nucleating agent, an antistatic agent, a pigment, a dye, a coupling agent, and light burned magnesia. Of course, the polyamide composition of the present embodiment may contain a resin other than polyamide.

In the polyamide composition of the present embodiment, the total content of the fibrous inorganic reinforcing material and the sintered body is preferably 50% by mass or more, more preferably 55% by mass or more, still more preferably 58% by mass or more. Meanwhile, the total content of the fibrous inorganic reinforcing material and the sintered body is preferably 70% by mass or less, more preferably 65% by mass or less, still more preferably 62% by mass or less.

<1.7. Physical properties>

It is more preferable as the bending strength of the polyamide composition of the present embodiment is higher. The bending strength is preferably 120 MPa or more, more preferably 150 MPa or more, still more preferably 160 MPa or more, still more preferably 170 MPa or more. The bending strength may be 230 MPa or less, 220 MPa or less, or 215 MPa or less. The bending strength of the polyamide composition is a value measured after a test piece is prepared using the polyamide composition. Specifically, the bending strength of the polyamide composition is a value measured by the method described in Examples.

It is more preferable as the thermal conductivity of the polyamide composition of the present embodiment is higher. The thermal conductivity is preferably 0.60 W/m·K or more, more preferably 0.65 W/m·K or more, still more preferably 0.70 W/m·K or more. The thermal conductivity of the polyamide composition may be 1.20 W/m·K or less, 1.10 W/m·K or less, or 1.00 W/m·K or less. The thermal conductivity of the polyamide composition is a value measured after a disk-shaped sample is prepared using the polyamide composition. Specifically, the thermal conductivity of the polyamide composition is a value measured by the method described in Examples.

It is more preferable as the polyamide composition of the present embodiment has a higher retention of tensile strength when subjected to high humidity treatment. Specifically, it is more preferable as the retention of tensile strength of a test piece prepared using the polyamide composition, that is, when the polyamide composition test piece is left to stand for 168 hours in an environment of 80°C and a relative humidity of 95% RH (that is, when subjected to high humidity treatment) is higher. This is because as the retention of tensile strength is higher, it is possible to further suppress a decrease in rigidity and embrittlement when a molded article obtained using the polyamide composition is exposed to a high humidity environment. Here, the retention of tensile strength is calculated by the following formula.

Retention of tensile strength = (tensile strength of polyamide composition test piece subjected to high humidity treatment/tensile strength of polyamide composition test piece not subjected to high humidity treatment) $\times$ 100

The retention of tensile strength is preferably 40% or more, more preferably 42% or more, still more preferably 45% or more. The retention of tensile strength may be 60% or less, 55% or less, 52% or less, or 50% or less. The retention of tensile strength is a value measured by the method described in Examples.

<1.8. Production method and use>

The polyamide composition of the present embodiment can be produced by kneading at least a polyamide, a fibrous inorganic reinforcing material, and a sintered body containing magnesium oxide in a kneading apparatus. For the kneading, an extruder (for example a single-screw extruder or a twin-screw extruder), a pressure kneader, or the like can be used. Among these, an extruder is preferred, and a twin-screw extruder is more preferred. The kneading temperature can be 220°C to 300°C. The kneading time can be, for example, about 2 to 15 minutes.

For example, the polyamide composition of the present embodiment can be produced by a method in which at least a polyamide, a fibrous inorganic reinforcing material, and a sintered body containing magnesium oxide are melt-kneaded using a twin-screw extruder, and then extruded into strands, and the strands are cooled if necessary, and cut if necessary.

The shape of the polyamide composition of the present embodiment can be appropriately set. The polyamide composition of the present embodiment may be, for example, in the form of pellets, strands, or powder, or may be molded into an arbitrary shape. Among these, the form of pellets is preferred.

The polyamide composition of the present embodiment can be used as a raw material for various molded articles. Among these, the polyamide composition of the present embodiment can be suitably used as a raw material for electrical and electronic parts, motor vehicle parts (for example, electric vehicle parts), industrial parts and the like that are required to exhibit high thermal conductivity. Examples of such parts include lamp sockets, electrical parts, heat sinks, parts for semiconductor packages, parts for cooling fans, connectors, switches, case housings, parts used around battery cases, and parts used inside battery cases. In particular, the polyamide composition of the present embodiment can be suitably used for producing peripheral parts (for example, parts used around battery cases, parts used inside battery cases) of electrical and electronic parts (for example, batteries) that cause high Joule heating.

<2. Molded article>

The molded article of the present embodiment can be obtained by molding the polyamide composition of the present embodiment described above. In other words, the molded article of the present embodiment can be obtained from the polyamide composition of the present embodiment described above. Examples of the molding method include injection molding, extrusion molding, and blow molding. Among these, injection molding is preferred.

EXAMPLES

Hereinafter, the present invention will be more specifically described by reference to Examples and Comparative Examples. Hereinafter, "parts" means "parts by mass" and "%" means "% by mass" unless otherwise stated.

<1. Raw materials>

The following raw materials were used.

<1.1. Polyamide>

A1 ····"M2000" manufactured by MEIDA (polyamide 6, relative viscosity 2.0, melting point 225°C)
A2····"ZISAMIDE TP4208" manufactured by ZIG SHENG INDUSTRIAL CO., LTD. (polyamide 6, relative viscosity 2.5, melting point 225°C)
A3····"ZISAMIDE TP6603" manufactured by ZIG SHENG INDUSTRIAL CO., LTD. (polyamide 6, relative viscosity 3.6, melting point 225°C)

<1.2. Fibrous inorganic reinforcing material>

B1 ····"ECS301HP-3-H" (glass fiber) manufactured by CHONGQING POLYCOMP INTERNATIONAL CORPORATION (CPIC)
B2····"CFUW-MC" (carbon fiber) manufactured by Nippon Polymer Sangyo Co., Ltd.

<1.3. Thermally conductive inorganic filler>

Cl ····"RF-50-AC" manufactured by Ube Material Industries, Ltd. (surface-treated magnesium oxide sintered body having particle diameter of 50 $\mu$m. This sintered body contains magnesium oxide, calcium oxide and silicon oxide.)
C2····Surface-treated magnesium oxide sintered body having particle diameter of 100 $\mu$m (details will be described later.)
C3····Surface-treated magnesium oxide sintered body having particle diameter of 10 $\mu$m (details will be described later.)
C4····"STAPMAG P" manufactured by Konoshima Chemical Co., Ltd. (light burned magnesia having particle diameter of 10 $\mu$m. No surface treatment)
C5····Magnesium oxide sintered body having particle diameter of 70 $\mu$m (details will be described later.)
C6····Surface-treated light burned magnesia having particle diameter of 50 $\mu$m (details will be described later).

Thermally conductive inorganic filler C2

Thermally conductive inorganic filler obtained by subjecting magnesium oxide sintered body having particle diameter of 100 $\mu$m (this sintered body contains magnesium oxide, calcium oxide and silicon oxide), which is manufactured according to JP-B-5993824, to the same surface treatment as thermally conductive inorganic filler Cl (that is, "RF-50-AC").

Thermally conductive inorganic filler C3

Thermally conductive inorganic filler obtained by subjecting magnesium oxide sintered body having particle diameter of 10 $\mu$m (this sintered body contains magnesium oxide, calcium oxide and silicon oxide), which is manufactured according to JP-B-5993824, to the same surface treatment as thermally conductive inorganic filler C1 (that is, "RF-50-AC").

Thermally conductive inorganic filler C5

Magnesium oxide sintered body having particle diameter of 70 $\mu$m (this sintered body contains magnesium oxide, calcium oxide and silicon oxide), which is manufactured according to JP-B-5993824.

Thermally conductive inorganic filler C6

Light burned magnesia having particle diameter of 50 $\mu$m, which is subjected to the same surface treatment as thermally conductive inorganic filler C1 (that is, "RF-50-AC").

<1.4. Antioxidant>

D····"SONGNOX2450" (hindered phenolic antioxidant) manufactured by BASF Co.

<1.5. Mold release agent>

E1 ····"Licolub WE-40" (aliphatic ester) manufactured by Clariant Japan Co., Ltd.

E2····"N.P.1500-S" (magnesium stearate) manufactured by TANNAN KAGAKU KOGYO CO., LTD.

<2. Production of pellets>

The respective raw materials were weighed according to the blending proportions presented in Tables 1 and 2, mixed using a tumbler, and then fed into a twin-screw extruder to obtain pellets. The set temperature of the twin screw extruder was 250°C to 300°C, and the kneading time was 5 to 10 minutes.

<3. Evaluation methods>

<3.1 Relative viscosity of polyamide (98% sulfuric acid solution method)>

The relative viscosity was measured at 25°C and a polyamide of 1 g/dL using 98% sulfuric acid and an Ubbelohde viscometer in conformity with JIS K6920-2: 2009.

<3.2. Melting point of polyamide>

Measurement was performed at a temperature rise rate of 20°C/min using a differential scanning calorimeter (EXSTAR 6000 manufactured by Seiko Instruments Inc.) and the endothermic peak temperature was determined.

<3.3. Bending strength>

The pellets were molded into a test piece having a shape specified in A1 of JIS K 7139: 2009 using an injection molding machine at a cylinder temperature of 260°C and a mold temperature of 80°C. A bending test was performed on this test piece in conformity with ISO178: 2010 to measure the bending strength (that is, the maximum bending stress that the test piece could withstand during the bending test). The bending test was performed at a support distance of 64 mm and a test speed of 2 mm/min by the method A in which the strain rate was not changed during the test.

<3.4. Thermal conductivity>

The pellets were molded into a flat molded article 2 mm in thickness, 100 mm in length, and 100 mm in width using an injection molding machine at a cylinder temperature of 260°C and a mold temperature of 90°C. The center of the flat molded article was cut into a disk shape having a width of about 10 mm. The thermal diffusion coefficient, density, and specific heat of the disk-shaped sample were measured. The thermal diffusion coefficient was measured by the laser flash method in conformity with ASTM E1461. The density was measured by the water substitution method in conformity with ISO 1183: 1987. The specific heat was measured by a method conforming to JIS K 7123: 1987. Then, the thermal conductivity was calculated by the following formula.

[Math 1]

$$\lambda = \rho \cdot Cp \cdot \alpha$$

$\lambda$ : Thermal conductivity (W/m·K)
$\rho$ : Density (kg/m$^3$)
$Cp$ : Specific heat (J/kg·K)
$\alpha$ : Thermal diffusion coefficient (m$^2$/s)

<3.5 Retention of tensile strength>

The pellets were molded into a test piece having a shape specified in A1 of JIS K 7139: 2009 using an injection molding machine at a cylinder temperature of 260°C and a mold temperature of 80°C. The test piece was left to stand for 168 hours in an environment of 80°C and a relative humidity of 95% RH. In other words, this test piece was subjected to high humidity treatment. A tensile test was then performed in conformity with ISO527-1: 2012, and the tensile strength (that is, the first maximum stress observed during the tensile test) was determined. The tensile test was performed at room temperature, a test speed of 5 mm/min, and a gripper distance of 115 mm. The tensile test was also performed on the test piece that had not been subjected to the high humidity treatment, and the tensile strength was determined. Then, the retention of tensile strength was determined by the following formula.

Retention of tensile strength = (tensile strength of test piece subjected to high humidity treatment/tensile strength of test piece not subjected to high humidity treatment) $\times$ 100

In all Examples and Comparative Examples, neither the test piece that was subjected to high humidity treatment nor the test piece that was not subjected to high humidity treatment broke before yielding.

<4. Results>

A table containing the results is presented below.

[Table 1]

| Composition (parts by mass) | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| | Polyamide A1 | 39.5 | | | 39.5 | 39.5 | 39.5 | 39.5 | 19.5 | | 39.5 | | 39.5 | 49.5 |
| | Polyamide A2 | | 39.5 | | | | | | 20 | 39.5 | | 44.5 | | |
| | Polyamide A3 | | | 39.5 | | | | | | | | | | |
| | Fibrous inorganic reinforcing material B1 | 20 | 20 | 20 | | 20 | 20 | 20 | 20 | 15 | 10 | 15 | 5 | 10 |
| | Fibrous inorganic reinforcing material B2 | | | | 20 | | | | | | | | | |
| | Thermally conductive inorganic filler C1 | 40 | 40 | 40 | 40 | | | 40 | 40 | 45 | 50 | 40 | 55 | 40 |
| | Thermally conductive inorganic filler C2 | | | | | 40 | | | | | | | | |
| | Thermally conductive inorganic filler C3 | | | | | | 40 | | | | | | | |
| | Thermally conductive inorganic filler C4 | | | | | | | | | | | | | |

EP 4 644 484 A1

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| | Thermally conductive inorganic filler C5 | | | | | | | | | | | | | |
| | Thermally conductive inorganic filler C6 | | | | | | | | | | | | | |
| | Phenolic antioxidant D | 0.2 | 0.2 | 0.2 | 0.2 | 0.2 | 0.2 | 0.2 | 0.2 | 0.2 | 0.2 | 0.2 | 0.2 | 0.2 |
| | Mold release agent E1 | 0.3 | 0.3 | 0.3 | 0.3 | 0.3 | 0.3 | | 0.3 | 0.3 | 0.3 | 0.3 | 0.3 | 0.3 |
| | Mold release agent E2 | | | | | | | 0.3 | | | | | | |
| Evaluation | Bending strength (MPa) | 184 | 182 | 191 | 268 | 172 | 209 | 188 | 183 | 165 | 151 | 153 | 128 | 144 |
| | Thermal conductivity (W/m·K) | 0.75 | 0.73 | 0.70 | 0.98 | 0.70 | 0.79 | 0.76 | 0.73 | 0.82 | 0.93 | 0.71 | 0.92 | 0.62 |
| | Retention of tensile strength (%) | 46 | 45 | 48 | 48 | 46 | 41 | 46 | 48 | 43 | 45 | 46 | 43 | 45 |

EP 4 644 484 A1

[Table 2]

| Composition (parts by mass) | | Comparative Example 1 | Comparative Example 2 | Comparative Example 3 | Comparative Example 4 | Comparative Example 5 | Comparative Example 6 |
|---|---|---|---|---|---|---|---|
| | Polyamide A1 | 39.5 | 49.5 | 39.5 | 39.5 | 39.5 | 39.5 |
| | Polyamide A2 | | | | | | |
| | Polyamide A3 | | | | | | |
| | Fibrous inorganic reinforcing material B1 | 20 | 40 | 40 | 20 | 20 | 20 |
| | Fibrous inorganic reinforcing material B2 | | | | | | |
| | Thermally conductive inorganic filler C1 | | 10 | 20 | 20 | | |
| | Thermally conductive inorganic filler C2 | | | | | | |
| | Thermally conductive inorganic filler C3 | | | | | | |
| | Thermally conductive inorganic filler C4 | 40 | | | 20 | | |
| | Thermally conductive inorganic filler C5 | | | | | 40 | |
| | Thermally conductive inorganic filler C6 | | | | | | 40 |
| | Phenolic antioxidant D | 0.2 | 0.2 | 0.2 | 0.2 | 0.2 | 0.2 |
| | Mold release agent E1 | 0.3 | 0.3 | 0.3 | 0.3 | 0.3 | 0.3 |
| | Mold release agent E2 | | | | | | |
| Evaluation | Bending strength (MPa) | 167 | 305 | 315 | 169 | 147 | 169 |
| | Thermal conductivity (W/m·K) | 0.67 | 0.26 | 0.39 | 0.68 | 0.63 | 0.62 |
| | Retention of tensile strength (%) | 12 | 46 | 46 | 15 | 26 | 20 |

In a case where the thermally conductive inorganic filler C3 (that is, surface-treated magnesium oxide sintered body having a particle diameter of 10 μm) was used, the retention of tensile strength, bending strength, and thermal conductivity were superior to those in a case where the thermally conductive inorganic filler C4 (that is, light burned magnesia having a particle diameter of 10 μm without surface treatment) was used (see Example 6 and Comparative Example 1).

In a case where the thermally conductive inorganic filler C1 (that is, surface-treated magnesium oxide sintered body having a particle diameter of 50 μm) was used, the retention of tensile strength, bending strength, and thermal conductivity were superior to those in a case where the thermally conductive inorganic filler C6 (that is, surface-treated light burned magnesia having a particle diameter of 50 μm) was used (see Example 1 and Comparative Example 6).

In a case where the thermally conductive inorganic fillers C1, C2, and C3 were used, the retention of tensile strength, bending strength, and thermal conductivity were superior to those in a case where the thermally conductive inorganic filler C5 (that is, magnesium oxide sintered body having a particle diameter of 70 μm without surface treatment) was used (see Examples 1, 5, and 6 and Comparative Example 5).

For the thermally conductive inorganic fillers C1, C2, and C3, as the particle diameter was smaller, the bending strength and thermal conductivity were superior (see Examples 1, 5, and 6). Meanwhile, as the particle diameter was smaller, the retention of tensile strength was lower (see Examples 1, 5 and 6).

As the amount of fibrous inorganic reinforcing material was larger, the bending strength was superior (see Examples 1, 10 and 12).

As the relative viscosity of polyamide was higher, the bending strength was superior but the thermal conductivity was lower (see Examples 1, 2 and 3).

INDUSTRIAL APPLICABILITY

The present invention can provide a polyamide composition and a molded article, and therefore is industrially applicable.

**Claims**

1. A polyamide composition comprising:

   a polyamide;
   a fibrous inorganic reinforcing material; and
   a sintered body containing magnesium oxide, wherein
   the sintered body is coated with a silica film, and
   a content of the sintered body is 35% by mass or more.

2. The polyamide composition according to claim 1, wherein a content of the fibrous inorganic reinforcing material is 10% by mass or more.

3. The polyamide composition according to claim 1, wherein the polyamide is a crystalline polyamide.

4. The polyamide composition according to claim 3, wherein a relative viscosity of the crystalline polyamide is 2.0 or more and 3.6 or less.

5. The polyamide composition according to claim 1, further comprising an antioxidant.

6. The polyamide composition according to claim 1, further comprising a hindered phenolic antioxidant.

7. The polyamide composition according to claim 1, further comprising a mold release agent.

8. The polyamide composition according to claim 7, wherein the mold release agent is a higher fatty acid ester-based compound.

9. The polyamide composition according to claim 1, wherein

   a bending strength is 120 MPa or more,
   a thermal conductivity is 0.60 W/m·K or more, and

a retention of tensile strength is 40% or more when high humidity treatment in which the polyamide composition is left to stand in an environment of 80°C and a relative humidity of 95% RH for 168 hours is performed, wherein the retention of tensile strength is calculated by the following formula:

retention of tensile strength = (tensile strength of polyamide composition test piece subjected to the high humidity treatment/tensile strength of polyamide composition test piece not subjected to the high humidity treatment) $\times$ 100.

10. A molded article comprising the polyamide composition according to any one of claims 1 to 9.

## INTERNATIONAL SEARCH REPORT

| International application No. |
| --- |
| **PCT/JP2023/045909** |

| | |
| --- | --- |
| **A. CLASSIFICATION OF SUBJECT MATTER** | |

*C08L 77/00*(2006.01)i; *C08J 5/00*(2006.01)i; *C08K 5/10*(2006.01)i; *C08K 5/13*(2006.01)i; *C08K 7/04*(2006.01)i;
*C08K 9/00*(2006.01)i; *C08K 13/06*(2006.01)i; *H01M 10/613*(2014.01)i; *H01M 10/625*(2014.01)i; *H01M 10/653*(2014.01)i
FI:   C08L77/00; C08K13/06; C08K5/13; C08K5/10; H01M10/613; H01M10/653; H01M10/625; C08K7/04; C08K9/00;
      C08J5/00 CFG

According to International Patent Classification (IPC) or to both national classification and IPC

| | |
| --- | --- |
| **B. FIELDS SEARCHED** | |

Minimum documentation searched (classification system followed by classification symbols)

   C08L77/00; C08J5/00; C08K5/10; C08K5/13; C08K7/04; C08K9/00; C08K13/06; H01M10/613; H01M10/625; H01M10/653

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

| | |
| --- | --- |
| **C. DOCUMENTS CONSIDERED TO BE RELEVANT** | |

| Category* | Citation of document, with indication, where appropriate, of the relevant passages | Relevant to claim No. |
| --- | --- | --- |
| X | JP 11-148007 A (KANEBO LTD.) 02 June 1999 (1999-06-02)<br>   claims 1-2, paragraphs [0005], [0011], [0013], [0015]-[0018], [0022]-[0030] example 3 | 1-10 |
| A | JP 2013-072034 A (ARONKASEI CO., LTD.) 22 April 2013 (2013-04-22)<br>   paragraphs [0009], [0050] | 1-10 |
| A | JP 2015-036415 A (ASAHI KASEI CHEMICALS CORPORATION) 23 February 2015<br>(2015-02-23)<br>   claim 1 | 1-10 |
| A | JP 2021-021415 A (OTSUKA CHEMICAL CO., LTD.) 18 February 2021 (2021-02-18)<br>   claims 1, 7, paragraphs [0041]-[0047], [0069]-[0081], example 5 | 1-10 |
| A | US 2022/0332922 A1 (COVESTRO(NETHERLANDS)B.V.) 20 October 2022 (2022-10-20)<br>   claim 1 | 1-10 |

| | | | |
| --- | --- | --- | --- |
| ☐ Further documents are listed in the continuation of Box C. | | ✓ See patent family annex. | |

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 March 2024** | **19 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2023/045909** |

| Patent document cited in search report | | | Publication date (day/month/year) | Patent family member(s) | | Publication date (day/month/year) |
| --- | --- | --- | --- | --- | --- | --- |
| JP | 11-148007 | A | 02 June 1999 | (Family: none) | | |
| JP | 2013-072034 | A | 22 April 2013 | (Family: none) | | |
| JP | 2015-036415 | A | 23 February 2015 | (Family: none) | | |
| JP | 2021-021415 | A | 18 February 2021 | (Family: none) | | |
| US | 2022/0332922 | A1 | 20 October 2022 | CN | 114391033 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018180123 A
- JP 6296197 B
- JP 5993824 B
- JP 5602650 B